**Europäisches Patentamt**

**European Patent Office**

**Office européen des brevets**

(19)

(11) Veröffentlichungsnummer: **0 219 598 B1**

(12) **EUROPÄISCHE PATENTSCHRIFT**

(45) Veröffentlichungstag der Patentschrift:
**18.01.89**

(51) Int. Cl.⁴: **E 21 D 9/06,** E 21 D 11/14,
E 02 D 31/00, B 09 B 1/00

(21) Anmeldenummer: **86105099.5**

(22) Anmeldetag: **14.04.86**

(54) **Ausbau unterhalb von Deponien.**

(30) Priorität: **17.10.85 DE 3536990**

(43) Veröffentlichungstag der Anmeldung:
**29.04.87 Patentblatt 87/18**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
**DE-A- 2 054 366**
**DE-A- 2 355 110**
**DE-A- 2 739 079**
**DE-A- 2 826 580**
**DE-A- 3 409 591**
**DE-C- 567 122**
**FR-A- 2 053 801**

(73) Patentinhaber: **Niederberg-Chemie GmbH,
Postfach 11 63, D-4133 Neukirchen-Vluyn (DE)**

(72) Erfinder: **Schlütter, Aloys, Rheinstrasse 42,
D-4152 Kempen 3 (DE)**
Erfinder: **Kaewert, Klaus, Gänsestrasse 4,
D-4000 Düsseldorf 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft das bergmännische Unterfahren von Deponien und Sanierung derselben und/oder anderer kontaminierter Bereiche.

In der Vergangenheit wurden Deponien, insbesondere Mülldeponien, häufig mit unzureichender Abdichtung zum Grundwasser hin oder überhaupt ohne Abdichtung errichtet, so dass aus diesen mit dem Oberflächenwasser Schadstoffe in den Boden einsickern und in das Grundwasser gelangen können. Das gleiche gilt für kontaminierte Flächen, z.B. Industrieflächen, auf denen chemische Rückstände, insbesondere Kohlenwasserstoffverbindungen und/oder Schwermetalle sich niedergeschlagen haben.

Zur Abdichtung von Deponien ist es aus der DE-A-3 409 591 bekannt, eine unterirdische Dichtungssohle im Erdboden herzustellen. Diese Dichtungssohle wird dadurch erzeugt, dass von einer Seite der Mülldeponie ausgehend eine Anzahl sich unter der gesamten Mülldeponie im wesentlichen waagrecht und parallel zueinander hindurch erstreckender Erdstreifen aus dem unter der Deponie befindlichen Erdboden herausgefördert werden. Das geschieht ggf. unter Abstützung des darüber befindlichen Erdreiches. Es entstehen röhrenförmige Hohlräume im Erdboden, die mit einem im wesentlichen flüssigkeitsdichten Füllmaterial gefüllt werden, wobei die Erdstreifen entweder dicht oder im Abstand nebeneinanderliegend angeordnet werden. Bei im Abstand angeordneten Erdstreifen werden die zwischen den entstehenden Hohlräumen verbliebenen Erdschichten von diesen Hohlräumen aus durch Injizieren von Dichtungsmasse im wesentlichen flüssigkeitsundurchlässig abgedichtet. Von diesem Verfahrensvorschlag ist in der Diskussion zwischen den Fachleuten lediglich die Röhrenbildung und die davon ausgehende Injektion übriggeblieben. Die Injektion scheidet als zuverlässige Abdichtung jedoch bereits aus, weil bei der Injektion nicht kontrollierbar ist, ob eine durchgängige Dichtung entsteht. Darüber hinaus ist absehbar, dass mit der Injektion eine Unmenge teuren Dichtmittels verbraucht wird. Deshalb ist nicht zu erwarten, dass das Verfahren mit vertretbaren Kosten zu verwirklichen ist.

Die DE-A-2 054 366 beschreibt ein Verfahren zur Herstellung von unterirdischen Stollen in nicht standfesten Böden, wobei die Stollen aus horizontal voranzutreibenden, vorzupressenden oder vorzurammenden Teiltraggliedern bestehen und die Teiltragglieder durch statisch wirksame Verbindungen in Stollenquerrichtung ein standfestes Gewölbe bilden bzw. einen Rahmen.

Auf die Abdichtung von Deponien übertragen hiesse das, die gesamte Deponie würde untertunnelt unter Erstellung eines tragfähigen Gewölberaumes. Die dafür notwendigen Kosten müssen extrem sein.

In der Vergangenheit hat es deshalb eine Vielzahl von Bemühungen zu einer kostengünstigen nachträglichen Abdichtung von Deponien gegeben.

Einer der älteren Vorschläge sieht vor, dass eine Folie unterhalb der Deponie in das Erdreich eingezogen wird. Das kann aus Gründen der Belastung der Folie aus dem darüberliegenden Erdreich nur in Abschnitten erfolgen. Dadurch werden aus den Folien Streifen. Zugleich sind diese Streifen als Profilstränge gedacht, um den Streifen ausreichende mechanische Festigkeit zu geben.

Die Profilstränge werden unter dem kontaminierten Bereich durchgezogen und/oder durchgeschoben. Das stösst bei bestimmten Böden auf erhebliche Schwierigkeiten. Deshalb ist für diese schwierigen Böden ein bergmännisches Unterfahren vorgeschlagen worden. Das bergmännische Unterfahren kann sich auf die im Bergbau gewonnenen Erfahrungen stützen, so dass eine Deponieabdichtung auf diesem Wege schneller als eine Deponieabdichtung mit den oben erwähnten Profilsträngen entwickelt ist.

Ein gravierender Unterschied zur Bergbautechnik ist die Beschaffenheit des Erdreiches. Im Unterschied zum Erzbergbau oder Steinkohlebergbau ist beim bergmännischen Unterfahren von kontaminierten Bereichen vorwiegend mit Lockergestein, Sand und Kies zu rechnen. Das kann zu Ausbrüchen führen.

Der Erfindung liegt die Aufgabe zugrunde, derartige Ausbrüche zu vermeiden. Nach der Erfindung wird die Aufgabe mit den im Anspruch 1 angegebenen Merkmalen gelöst.

Als besonders vorteilhaftes Abbauverfahren wird ein Abbau in Form eines Aufhauens angesehen, das hin- und hergehend unter dem kontaminierten Bereich vorgetrieben wird. Zur Vermeidung von Setzbewegungen soll der abgebaute Bereich nach Möglichkeit wieder verfüllt werden. Als Versatz dient vorzugsweise der gewonnene Ausbruch. Der nach Möglichkeit zugleich verfestigt wird. Das Verfestigen kann mechanisch oder auch durch Bindemittel erfolgen. Als Bindemittel kommen Zementmörtel, aufgearbeitete Rückstände aus der Abgaswäsche von Kraftwerken mit Kalkmilch oder auch Bindemittel wie Wasserglas mit Säureestern in Betracht.

Der durch den Abbau entstandene Hohlraum wird verfüllt bis auf einen Stollen, der während des Abbaus einen Förderer aufnimmt und eine ausreichende Zugänglichkeit des Abbaus gewährleistet.

Die gesamten Arbeiten sind davon abhängig, dass die Abbaufront mit einem entsprechenden Ausbau versehen ist. Als Ausbau dient vorzugsweise ein Messerschild. Der Messerschild besitzt Hangendmesser, die entsprechend der notwendigen Neigung der Abbaufront vorragen. Das gilt für den eingefahrenen Zustand. Sind die Messer je nach Beschaffenheit des Erdreiches 0,6 bis 1,5 m in die Abbaufront hineingedrückt worden. Damit entsteht eine Vorpfändung des Ausbaus. Mit der Verpfändung wird das Hangende gegen ein Ausbrechen gesichert.

Für die seitlichen Messer des Messerschildes nimmt mit zunehmendem Abstand vom Hangenden die Notwendigkeit der Vorpfändung ab. Vorzugsweise sind die seitlichen Messer entsprechend der natürlichen Böschung der Abbaufront versetzt angeordnet, d.h. mit zunehmendem Abstand vom Hangenden stückweise zurückgesetzt. Das gilt wiederum für den eingezogenen Zustand.

Die auf dem Liegenden ruhenden Sohlmesser dienen im wesentlichen als Schreitwerk, um den Messerschild mit zunehmendem Abbau in Vortriebsrichtung vorzubewegen.

Dabei bildet der Messerschild einen vorne und hinten offenen Mantel. Vorn ist die Abbaufront. Dort nimmt der Messerschild das Abbauwerkzeug auf. Nach hinten wird der gewonnene Ausbruch wieder versetzt und/oder abgefördert.

Der begehbare Stollen wird vorzugsweise an einer Seite des Aufhauens angelegt. An dieser Seite ist in weiterer Ausbildung der Erfindung gleichfalls eine Neigung, d.h. eine Böschung, vorgesehen. Diese Böschung entsteht dadurch, dass der Messerschild an der zugehörenden Seite eine entsprechende Neigung besitzt.

Die seitliche Böschung am Aufhauen erscheint zunächst unwirtschaftlich, sie ist jedoch dann von Vorteil, wenn für den Stollen ein seitlich offener Ausbau vorgesehen ist. Der seitlich offene Ausbau, der bereits daraus resultiert, dass ein hin und hergehendes Aufhauen vorgesehen ist. Beim Zurücklaufenden, sich unmittelbar an das zuerst eingebrachte Aufhauen anschliessende Aufhauen kann bei seitlich offenem Ausbau der dort vorhandene Förderer zum Abfördern des gewonnenen Ausbruches benutzt werden. Ferner ermöglicht der seitlich offene Ausbau das Anschliessen einer Abdichtungsbahn an eine beim ersten Aufhauen verlegte Abdichtungsbahn.

Der Ausbau kann durch U-förmige Profile gebildet werden. Die U-förmigen Profile werden zur Herstellung eines seitlich offenen Ausbaus liegend angeordnet, mit dem offenen Ende zur Böschung hin. Dabei ragt der obere Schenkel entsprechend der Böschung vor, um ein Einbrechen von Lockergestein, Kies oder Sand zu verhindern.

Die Ausbauprofile werden gegeneinander abgestützt. Zur Hangendsicherung sind zwischen den Ausbauprofilen Matten oder Bleche angeordnet. Bei Verwendung von Matten sind diese entsprechend engmaschig und/oder mehrlagig. Wahlweise wird der Ausbau auch mit einer Abdichtungsbahn abgedeckt.

Von Vorteil ist auch ein seitliches Abhängen des Ausbaus mit einer Abdichtungsbahn. Für das seitliche Abhängen und die Abdeckung des Ausbaus kann eine einteilige Abdichtungsbahn verwendet werden.

Der Ausbau wird mitsamt der Abdichtungsbahn schrittweise vorangebaut. Der Vorbau des Ausbaus ist gleich dem Abbaufortschritt beim Aufhauen. Der Vorbau des Ausbaus wird im Messerschild und/oder angehängten Einrichtungen zusammengesetzt. Angehängte Einrichtungen können einen Ausbau für das Verlegen einer Abdichtungsbahn auf dem Liegenden und einen Ausbau für den Versatz und/oder das Erzeugen von Glätteschichten auf dem Liegenden für die Abdichtungsbahn sein. Vorzugsweise wird der Ausbau für den Stollen in den beiden letztgenannten Bereichen auf der bereits liegenden Abdichtungsbahn zusammengesetzt. Durch den entstandenen und durch eine seitliche und/oder oben aufliegende Abdichtungsbahn geschützten Ausbau bildet dieser ein Formwerkzeug für den Blasversatz. D.h. der Blasversatz kann ohne weiteres gegen den so präparierten Ausbau gespritzt und/oder geschleudert werden.

Ohne einen mit seitlicher Abdichtung versehenen Ausbau für den Stollen ist wahlweise in dem letzten Abschnitt des Messerschildes bzw. seiner anhängenden Teile ein senkrechtstehendes Schwert als Formgebung für den Versatz angeordnet.

Wahlweise wird der Ausbau auch durch Bleche gebildet, die in Umfangsrichtung und/oder in Längsrichtung des für den Stollen vorgesehenen Ausbaus abschnittsweise zusammengesetzt sind.

Die Bleche bilden nach der Erfindung Gleitbögen, so dass sie im vormontierten Zustand eingebaut werden können. Das geschieht dann in der Weise, dass jeder durch ein Profilblech gebildete Bogen das Hangende bis zur Böschung unterstützt. Dabei können Hilfsstützen verwendet und diese z.B. an den Bracken oder Rinnen eines im Stollen vorgesehenen Förderers abgestützt werden. In dieser Form bleiben die durch die Bleche gebildeten Gleitbögen offen, bis das nachfolgende Aufhauen einschliesslich Verlegen der Abdichtungsbahn fertiggestellt ist. Dann wird das Blech gelöst, so dass es heruntergleitet oder heruntergezogen werden kann. Dann verschliessen die Bleche die offene Seite des Ausbaus und bilden eine geschlossene Tunnelwölbung. Durch Verschraubung kann dabei ein in sich starkes Gebilde erzeugt werden.

In der Zeichnung sind verschiedene Ausführungsbeispiele der Erfindung dargestellt.

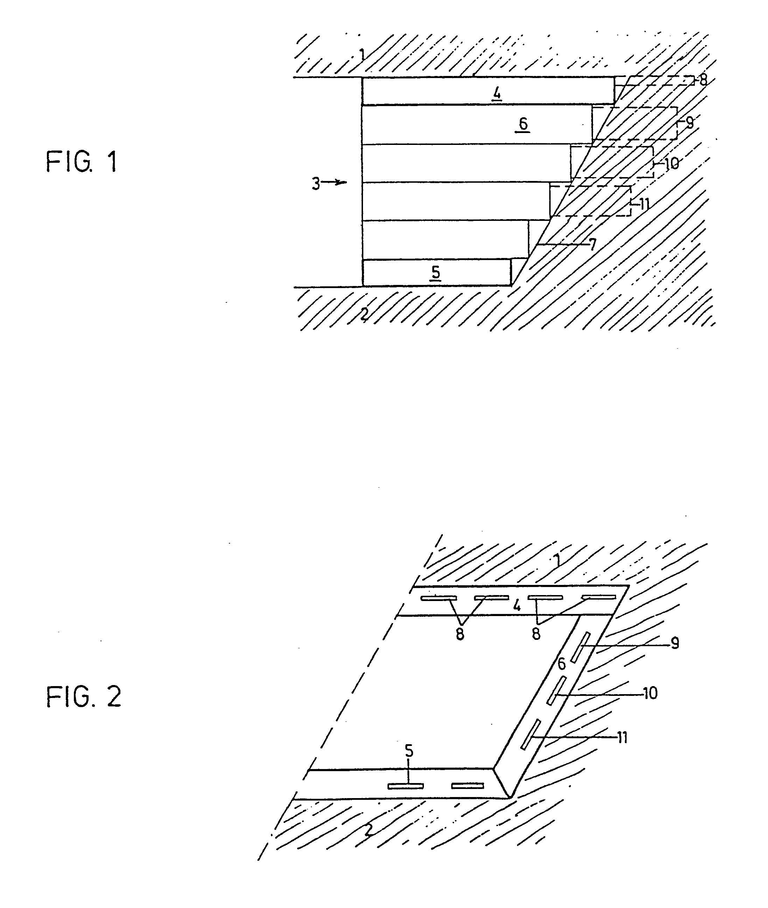

Figur 1 und 2 zeigen in schematischer Darstellung ein bergmännisches Unterfahren einer Mülldeponie. Das dabei entstehende Hangende ist mit 1, das Liegende mit 2 bezeichnet.

Der Abbau wird mit Hilfe eines Schrämwalzenladers oder eines leichten, verschiebbar und/oder schwenkbaren und/oder höhenverstellbaren Löffelbaggers oder Greiferbaggers bewirkt. Das nicht dargestellte Abbauwerkzeug wird durch einen Messerschild 3 geschützt. Der Messerschild 3 besteht aus Hangendmesser 4, Sohlmessern 5 und seitlichen Messern 6. Alle Messer sind in einem in sich steifen Rahmen gehalten.

Der Messerschild hat neben der Abstützung des Hangenden die Aufgabe, die Abbaufront zu sichern. Im Ausführungsbeispiel ist eine abgeböschte Abbaufront 7 vorgesehen. Durch die Abböschung soll ein Hereinbrechen von Lockergestein, Sand oder Kies verhindert werden. Der Böschungswinkel beträgt 60° zum Liegenden. Die Böschung wird bei Verwendung eines Walzenladers als Abbauwerkzeug durch eine entsprechende Neigung des Walzenladers hergestellt.

Wahlweise kann die Böschung bei Verwendung von Walzenladern mit geringmächtigen Walzen auch terrassenförmig angelegt werden. Im Querschnitt nach Figur 1 ergibt sich dann eine Abstufung der Böschung. Die einzelnen Stufen (Terrassen) kennzeichnen zugleich die Arbeitsbahn des Walzenladers.

Die Vorpfändung des Ausbaus wird mittels gestrichelt dargestellter Messerspitzen 8, 9, 10 und 11 erreicht. Diese Messerspitzen dringen beim Vorwärtsbewegen der Messer soweit in die Abbaufront ein, dass sie nach einem Arbeitsgang des Abbauwerkzeuges im Ausführungsbeispiel noch etwa 1 m im Gestein bzw. Sand oder Kies stecken.

Der Abbau erfolgt in der Weise, dass beginnend von einer Deponieseite das Abbauwerkzeug in Form eines Aufhauens bis zur anderen Deponieseite vorgetrieben wird. Dort wird das Abbauwerkzeug entweder um 180° geschwenkt oder in einer offenen Baugrube umgesetzt. Durch Schwenken oder Umsetzen wird erreicht, dass das nächste sich von einer Deponieseite zur anderen vorgetriebene Aufhauen mit seiner Seite unmittelbar an eine Seite des vorher erstellten Aufhauens anschliesst.

Beim Vortrieb eines Aufhauens wird hinter dem Messerschild und hinter nicht dargestellten nachgeordneten Einrichtungen zum Auslegen einer Abdichtungsbahn, Herstellung einer Glätteschicht auf dem Liegenden der entstandene Hohlraum wieder verfüllt und verfestigt. Zur Verfüllung dient etwa 60% des gewonnenen Ausbruches, der unmittelbar hinter dem Abbauwerkzeug innerhalb des Messerschildes abgesiebt und getrennt wird. Die zum Verfüllen bestimmte Fraktion wird über eine pneumatische und/oder mechanische Einrichtung in den hinter dem Messerschild und den nachgeordneten Einrichtungen entstandenen Hohlraum geworfen bzw. transportiert. Die andere Fraktion wird über einen Bandförderer oder Kettenförderer abgefördert. Dazu wird seitlich am Aufhauen ein Stollen erstellt. Der Stollen wird so errichtet, dass er zu der Seite des Aufhauens hin offen ist. Damit kann beim nachfolgenden Aufhauen das abzufördernde Material auf das in diesem Stollen angeordnete Transportband bzw. den Kratzer aufgegeben werden, ohne das ein weiterer Stollen mit Transporteinrichtung angelegt werden muss.

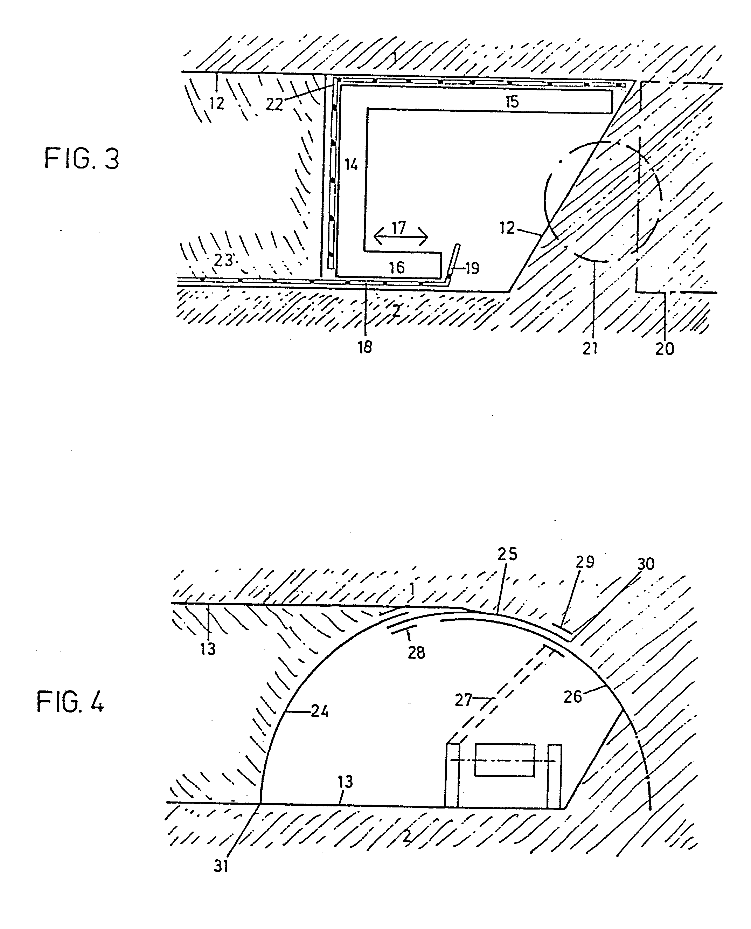

Figur 3 und 4 zeigen solche Stollen. Während der Stollen nach Figur 3 ein eckiges Profil bildet, ist nach Figur 4 ein abgerundetes Profil vorgesehen. Dem Stollenprofil ist auch das Profil des Messerschildes an der zugehörigen Seite angepasst. In Figur 3 ist die äussere Kante des Messerschildes beschreibende Linie mit 12, in Figur 4 mit 13 bezeichnet.

Nach Figur 3 ist für den Stollen ein Ausbau mit Ausbauprofilen 14 vorgesehen. Das Ausbauprofil 14 hat eine U-Form mit einem kürzeren Schenkel 16 und einem vorragenden Schenkel 15. Der Schenkel 15 stützt das Hangende 1 ab. Der Schenkel 16 nimmt im Ausführungsbeispiel nach Figur 1 einen Kettenkratzer 17 als Förderer auf.

Für den Transport sind die Ausbauprofile 14 mehrteilig. Sie bestehen aus einzelnen Holmen, die in den dem Messerschild nachgeordneten Ausbaueinrichtungen zusammengesetzt werden. Das Zusammensetzen erfolgt auf einer vorher auf dem Liegenden 2 gelegten Abdichtungsbahn 18. Zur Sicherung der Abdichtungsbahn ist unter der Abdichtungsbahn eine wahlweise armierte Glätteschicht und/oder Betonschicht vorgesehen. Die Abdichtungsbahn selbst ist vorzugsweise oben und unten mit einem stützenden Glasfaservlies kaschiert. Das mit 19 bezeichnete seitliche Ende ist ausreichend weit in den Stollen hineingeführt, um nach Fertigstellung des Stollens beim nächsten – strichpunktiert dargestellten – Aufhauen eine Verbindung mit der dann in diesem Aufhauen 20 gelegten Abdichtungsbahn zu ermöglichen. Um eine saubere Schweissnaht an der Verbindungsstelle zwischen beiden Abdichtungsbahnen zu gewährleisten, wird das Ende 19 der Abdichtungsbahn 18 z.B. mit einer selbstklebenden Folie geschützt, die sich zum Verschweissen des Endes 19 leicht abziehen lässt. Statt der selbstklebenden Folie können auch stabile Schutzkästen oder geschützte Rohre verwendet werden. In die Kästen und Rohre lässt sich das seitliche Ende 19 gerollt einbringen. Dann ist trotz grossen Überstandes gesichert, dass weder beim Begehen des Stollens noch beim anschliessenden Aufhauen die Gefahr einer Beschädigung für das Ende 19 besteht.

Die Ausbauprofile 14 sind durch nicht dargestellte Streben gegeneinander verspannt. Oben auf den Schenkeln 15 liegen Matten aus Stahldraht auf, die bei einem Ausbauabstand von 1 m infolge ausreichender Mattenstärke das Hangende sichern. Die Matten sind zweilagig. Als oberste Lage sind engmaschige Matten aus dünnem Draht vorgesehen, die in Verbindung mit einer oben aufgelegten weiteren Abdichtungsbahn 22 den Stollen sichern. Die Abdichtungsbahn 22 überlappt den Ausbau seitlich, so dass der oben erwähnte Versatz 23 auch mit Mörtelzuschlägen bzw. flüssigen Bindemittelzuschlägen in den beim Aufhauen entstandenen Hohlraum geworfen bzw. geblasen werden kann, ohne dass die Gefahr eines Eindringen des Versatzes in den Stollen besteht.

Nach Figur 4 sind anstelle der Ausbauprofile 14 Gleitbögen vorgesehen. Die Gleitbögen sind mehrteilig. Nach Figur 4 sind im Querschnitt 3 Bogenteile 24, 25 und 26 vorgesehen. In Längsrichtung besteht der Ausbau gleichfalls aus einzelnen Abschnitten. D.h. die Ausbaubögen haben in Längsrichtung des Stollens zwischen 1 m und 2 m Breite, im Ausführungsbeispiel 1,5 m. Die Gleitbögen bestehen aus dünnem Blech, das gewählt ist, um dem Ausbau ausreichende Festigkeit zu geben. Nach Figur 4 werden die Gleitbögen in der Form eingebaut, dass sie zunächst ineinander geschoben zum Messerschild transportiert werden. Dort werden die Gleitbögen mit dem Abschnitt 24 aufgestellt und die Abschnitte 25 und 26 zusammen ausgezogen und durch eine Stütze 27 gesichert. Die Stütze 27 greift an den Maschinenrahmen des nach Figur 4 vorgesehenen Bandförderers. Die Stütze 27 wird entfernt, wenn nach dem anschliessenden Aufhauen das Segment 26 des Gleitbogens ausgezogen worden ist. Dann nimmt das Segment 26 die in Figur 4 strichpunktiert dargestellte Lage ein.

Die Einzelnen Segmente der Gleitbögen sind durch Führungen 28 und 29 gehalten. Die Führungen können durch im Querschnitt essförmige Teile gebildet werden, sie können auch durch bogenförmige sich von der Stelle 30 bis zur Liegendstelle 31 erstreckende Profile mit dem Querschnitt eines Doppel-T-Profiles gebildet werden. Diese Profile nehmen an der einen Seite die Segmente 24, 25, 26 des einen Gleitbogens und an der anderen Seite die Segmente des benachbarten Gleitbogens auf.

## Patentansprüche

1. Bergmännisches Unterfahren von Deponien und Sanierung derselben und/oder anderer kontaminierter Bereiche, dadurch gekennzeichnet, dass die Abbaufront mindestens um 30° zur Vertikalen als Böschung geneigt ist und das Örterbau erfolgt, dessen Örter die Form von Aufhauen haben, bei denen der in Abbaurichtung gelegene Stoss als Böschung geneigt ist, wobei zur Auffahrung der Örter ein Messerschild (3) mit hervorragenden Hangendmessern (8) verwendet wird, der an einer Seite eine der Böschung des Stosses (12) entsprechende Neigung aufweist und Abdichtungsbahnen (18) auf der Sohle ausgelegt werden, deren abbaustossseitiger Rand ausreichend weit in das Ort hineingeführt ist, um nach Fertigstellen des Parallelortes, d.h. des nächsten Aufhauens (20), eine Verbindung mit der dann in diesem ausgelegten Abdichtung (18) zu ermöglichen.

2. Ausbau nach Anspruch 1, dadurch gekennzeichnet, dass in dem Bereich der seitlichen Böschung des Aufhauens ein zur Böschung hin offener Ausbau für einen Stollen und/oder für einen Förderer vorgesehen ist.

3. Ausbau nach Anspruch 2, gekennzeichnet durch U-förmige Profile (14), die liegend angeordnet sind und einen vorragenden oberen Schenkel (15) aufweisen.

4. Ausbau nach Anspruch 3, dadurch gekennzeichnet, dass die Ausbauprofile (14) gegeneinander abgestützt sind und oben mit Matten versehen sind.

5. Ausbau nach Anspruch 4, dadurch gekennzeichnet, dass die Matten kunststoffbeschichtet und/oder mit einer Kunststoffbahn (22) abgedeckt sind.

6. Ausbau nach einem oder mehreren der Ansprüche 2 bis 5, dadurch gekennzeichnet, dass die Ausbauprofile (14) an der der Böschung abgewandten Seite mit einer Kunststoffbahn (22) abgehängt sind.

7. Ausbau nach Anspruch 2, gekennzeichnet durch Gleitbögen, die aus Blechen gebildet sind, die abschnittsweise in Umfangs- und/oder Längsrichtung des Aufbaues aneinandergesetzt sind.

8. Ausbau nach Anspruch 7, dadurch gekennzeichnet, dass die Blechabschnitte (24, 25, 26) in- und/oder auseinanderschiebbar oder faltbar sind.

## Claims

1. Tunnelling or excavation beneath dumps or deposits and renovation of such dumps or deposits and/or of other contaminated zones, characterized in that the working face is inclined by at least 30° to the vertical as a soil slope and the tunnelling takes place by face working, the face workings of which have the form of side workings, wherein the working face (12), orientated in the direction of working, is inclined as a soil slope, a cutting shield (3) with projecting roof blades being used for driving the face workings, which shield possesses at one side an inclination corresponding to the slope of the working face (12), and sealing sheets (18) are laid on the floor, the edge of which sheets nearest the working face is continued sufficiently far into the excavation to make possible, after the parallel excavation, that is the next side working (20) has been completed, a connection with the sealing sheet (18) then laid in this side working.

2. Liner according to Claim 1, characterized in that, in the region of the lateral soil slope of the side working, a liner open towards the soil slope is provided for a gallery and/or for a conveyor.

3. Liner according to Claim 2, characterized by U-shaped profiles (14), which are disposed on their sides and possess a projecting upper arm (15).

4. Liner according to Claim 3, characterized in that the liner profiles (14) are supported against one another and are furnished at the top with mats.

5. Liner according to Claim 4, characterized in that the mats are coated with plastics and/or are covered with a plastics sheet (20).

6. Liner according to one or more of Claims 2 to 6, characterized in that the liner profiles (14) are hung with a plastics sheet (22) at the side remote from the soil slope.

7. Liner according to Claim 2, characterized by sliding roadway arches which are formed of metal sheets, which are mounted adjacent to one another in sections, in the circumferential and/or in the longitudinal direction of the liner.

8. Liner according to Claim 7, characterized in that the metal sheet sections (24, 25, 26) can be slid into and/or out of one another or can be folded.

## Revendications

1. Creusement de galeries de type minier sous des dépôts, et assainissement de ces dépôts et/ou d'autres zones contaminées, caractérisé en ce que le front de taille est incliné en talus d'au moins 30° par rapport à la verticale; et en ce que l'on fait une exploitation par galeries, dont les galeries sont en forme de tailles dont le fond situé dans la direction de l'exploitation est incliné en talus, tandis que pour creuser les galeries on emploie un bouclier à couteaux (3) qui présente des couteaux de toit (8) en saillie et qui présente d'un côté une inclinaison correspondant à celle du fond (12), et en ce que l'on pose sur le sol des bandes d'étanchéité (18) dont le bord, côté fond, pénètre suffisamment loin dans la galerie pour permettre, après achèvement de la galerie parallèle, c'est-à-dire de la taille voisine (20), une liaison avec l'étanchéité (18) posée dans cette galerie parallèle.

2. Soutènement selon la revendication 1, caractérisé en ce que, dans la zone du talus latéral de la taille, il est prévu un soutènement, ouvert en direction du talus, pour une galerie de service et/ou pour un transporteur.

3. Soutènement selon la revendication 2, caractérisé par des profilès en U (14) qui sont disposés couchés et présentent une aile supérieure débordante (15).

4. Soutènement selon la revendication 3, caractérisé en ce que les profilés de soutènement (14) s'appuient l'un contre l'autre et sont munis, en haut, de tapis.

5. Soutènement selon la revendication 4, caractérisé en ce que les tapis sont revêtus de plastique et/ou recouverts d'une bande plastique (22).

6. Soutènement selon une ou plusieurs des revendications 2 à 5, caractérisé en ce que, du côté opposé au talus, une bande de plastique (22) est suspendue aux profilés de soutènement (14).

7. Soutènement selon la revendication 2, caractérisé par des cintres coulissants qui sont formés de tôles et qui sont placés, par tronçons, les uns à côté des autres dans la direction périphérique et/ou dans la direction longitudinale de la structure.

8. Soutènement selon la revendication 7, caractérisé en ce que les tronçons de tôle (24, 25, 26) peuvent coulisser ou se replier pour entrer les uns dans les autres et/ou sortir les uns des autres.

FIG. 1

FIG. 2

FIG. 3

FIG. 4

9